# EUROPEAN PATENT SPECIFICATION

(11) **EP 1 487 313 B1**
(45) Date of publication and mention of the grant of the patent: **16.06.2010**
(21) Application number: 02807103.3
(22) Date of filing: 22.11.2002
(51) Int. Cl.: A47J 31/06, A47J 31/24, A47J 31/44

(54) **DEVICE FOR INFUSIONS OF COFFEE**
VORRICHTUNG ZUM AUFGIESSEN VON KAFFEE
APPAREIL D'INFUSION DE CAFE

(30) Priority: 25.03.2002 ES 200200731 U
(43) Date of publication of application: 22.12.2004
(73) Proprietor: Ascaso Factory, S.L., 08940 Cornella de Llobregat (ES)
(72) Inventor: ASCASO LOPEZ, José Luis, E-08940 Cornella de Llobregat (ES)
(74) Representative: Sugrañes Patentes y Marcas
(86) International application number: PCT/EP2002/013161
(87) International publication number: WO 2003/079874

(56) References cited:
- EP-A- 0 153 549
- EP-A- 0 671 141
- WO-A-02/051290

## Description

### Technical sector of the invention

The object of the invention is a device for infusions of coffee, of the type habitually used in catering and in the home for the infusion of dosages of coffee.

### Background to the invention

Multiple embodiments are known of devices for infusions of coffee in pre-measured dosages. Essentially, the known embodiments of such devices comprise a water tank, a heat exchanger, for example, an electrical one, an infusion mechanism and a dosage carrying mechanism. In general, said tank, heat exchanger and infusion mechanism constitute a functional unit, independent of the dosage carrying mechanism, which is coupled and uncoupled from said functional unit for the loading and unloading of the coffee dosage, that is, the dosage carrying mechanism constitutes a unit, which is independent of the device that needs to be coupled and uncoupled by the user in each infusion operation. An example of such a device is disclosed on document EP-A-0671141.

The inventor does not know of devices for coffee infusions in which the heat exchanger, the infusion mechanism and the dosage carrying mechanism are integrated into a single functional unit, wherein the dosage carrying mechanism is accessible by the user for the preparation of the infusion.

### Explanation of the invention

The device for coffee infusions object of the invention comprises a heat exchanger, provided with water inlet means and water outlet means at a higher temperature; an infusion mechanism, that comprises a water inlet chamber coming from the heat exchanger and an outlet chamber adapted for receiving a dosage; and a coffee dosage carrying mechanism.

The device is characterised as defined in the characterizing portion of claim 1.

According to another feature of the device of the invention, the infusion mechanism comprises an intermediate body fastened to the heat exchanger and provided with a stepped centred through orifice, configuring three successive portions in progressively decreasing section from top to bottom, in which the upper portion is adapted for housing a tightening discoidal element, provided with a centred through orifice for the water coming from the heat exchanger, and a membrane, the water inlet chamber being defined between the discoidal element and the membrane, whereas the intermediate portion and the lower portion are adapted for housing a piston provided with a centred through orifice, in which a retention valve, integral to the membrane is housed and, at its lower end, to a cavity which configures the outlet chamber.

Another feature of the device of the invention consists of the fact that the longitudinal movement mechanism comprises, both in the thrust body and laterally, two radial thrust protuberances adapted for being housed in respective helicoidal thrust grooves which the dosage carrying body is provided with, the dosage carrying body also being provided with two radial guide protuberances adapted for being housed in respective guide grooves which the tubular body is provided with, all of it being adapted in such a way that the rotation of the drive arm causes the thrust body to turn and the sliding of the radial thrust protuberances through the helicoidal thrust grooves of the dosage carrying body, which is thrust vertically, guided by the radial guide protuberances through the guide grooves in the direction corresponding to the rotation of the drive arm.

### Brief description of the drawings

A form of embodiment of the device for the infusion of coffee object of the invention is illustrated in the attached drawings by way of non-limiting example:
Fig. 1 is a longitudinal section view of the device for the infusion of coffee object of the invention.
Fig. 2 is a perspective view of the components of the device of Fig. 1.

### Detailed description of the drawings

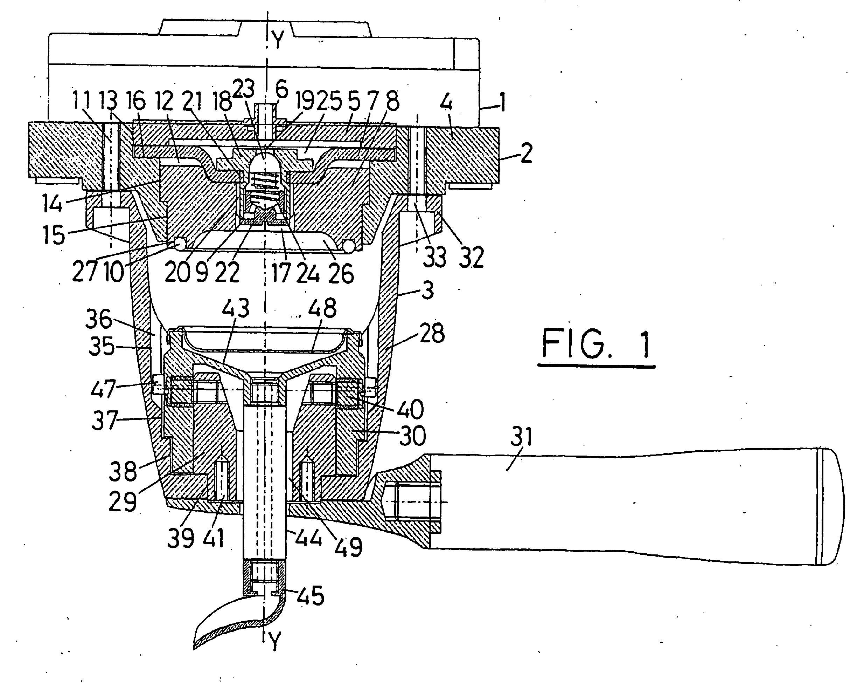

In Fig. 1, the device for the infusion of coffee object of the invention is represented, wherein it can be appreciated that the device comprises a heat exchanger 1, an infusion mechanism 2 and a dosage carrying mechanism 3, coupled vertically and integrally in continuation from the other and defining a longitudinal axis Y-Y. For the purposes of simplifying the description, the representation of the electrical and water supply means to the heat exchanger 1 has been obviated, as well as any other known components incorporable to the device, for example, such as a support for the device.

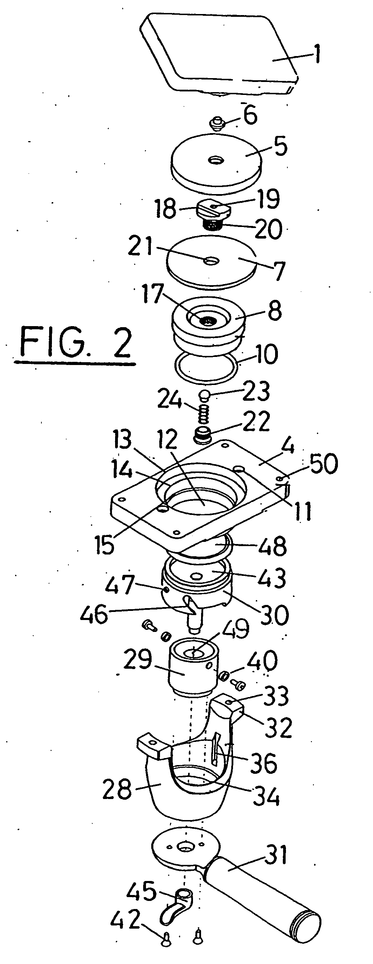

In the description which follows of the device of the invention, both Figs. 1 and 2 are referred to.

The infusion mechanism 2 comprises an intermediate body 4, a tightening discoidal element 5, a through sleeve 6, a membrane 7, a piston 8, a retention valve 9 and a watertight seal 10. The intermediate body 4 is provided with through orifices 50 for fastening to the heat exchanger 1 by means of screws, not represented, and with through orifices 11 for the coupling of the dosage carrying mechanism 3, and with a centred through orifice 12 configuring three successive portions in progressively decreasing section from top to bottom, with an upper portion 13, an intermediate portion 14 and a lower portion 15 connected by means of steps: the upper portion 13 is adapted for housing the discoidal element 5, which is fastened to the heat exchanger 1 by means of the through sleeve 6, and the membrane 7, which remains fastened at its perimeter by compression between the discoidal element 5 and the step 16 that configures the connection of the upper portion 13 with the intermediate portion 14. The intermediate portion 14 and the lower portion 15 are adapted for housing the piston 8 in such a way that the latter is capable of moving vertically in both directions, the piston 8 being provided with a centred through orifice 17. The retention valve 9 comprises a main hollow body 18, provided with an entrance orifice 19 and a thread 20 for its coupling by threading to the piston 8 through a centred orifice 21, which the membrane 7 is provided with, in such a way that the latter remains fastened to the piston 8. Furthermore, the retention valve 9 comprises an outlet body 22, a closing body 23 and a closing spring 24, which works permanently by compression. With the described arrangement of the infusion mechanism 2 a water inlet chamber 25 remains configured between the discoidal element 5 and the membrane 7 and, at the lower end of the piston 8, a cavity comprising a water outlet chamber 26, the watertight seal 10 being arranged in a groove 27, perimetral to the outlet chamber 26.

The dosage carrying mechanism 3 comprises a tubular body 28, a thrust body 29 and a dosage carrying body 30, which are co-axially arranged and mutually coupled. At its upper end the tubular body 28 is provided with radial protuberances 32, fitted with respective through orifices 33, adapted for their fastening to the intermediate body 4 by means of screws, not represented, and laterally with two spacious facing apertures 34, adapted for the passage of a dosage of coffee, not represented, and at its lower end, inside, with four cylindrical portions in progressively decreasing section from top to bottom and connected by steps, in which the upper portion 35, the first intermediate portion 37, and the second intermediate portion 38, receive the dosage carrying body 30, and the lower portion 39 receives the thrust body 29. The thrust body 29 has an essentially cylindrical shape and is provided with a centred orifice 49, and at its lower end with two threaded orifices 41 for fastening the drive arm 31 by means of two screws 42. The dosage carrying body 30 has an essentially tubular shape, closed at its upper end and configuring a hollow inverted truncated cone portion 43 as if it were a funnel, adapted for receiving a removable dosage 48, which extends into a tubular conduit 44 that traverses the thrust body 29 and ends in a pump 45 for the pouring of the coffee infusion.

The arrangement of the piston 8 makes possible that, on receiving the dosage carrying body 30 driven by the thrust mechanism 29, it is capable of tilting slightly in order to ensure the complete water-tightness of the coupling. The tilting movement is possible thanks to the pressure the piston exerts on the membrane 7, arranged above the piston and generally made of flexible material, as a consequence of the pressure the thrust body exerts on the piston itself.

The dosage carrying mechanism 3 is provided with a movement mechanism of the dosage carrying body 30 which comprises the following elements. In the thrust body 29 and laterally two radial thrust protuberances 40 arranged diametrically with respect to the other: in the dosage carrying body 30 and laterally two helicoidal thrust grooves 46, adapted for receiving corresponding radial thrust protuberances 40 from the thrust body 29, and two radial guide protuberances 47 arranged diametrically to each other; and in the tubular body 28, and in the upper portion 35, two guide grooves 36 adapted for receiving corresponding radial guide protuberances 47 from the dosage carrying body 30.

The operation of the device of the invention is described below. The rotation of the drive arm 31 in one direction causes the corresponding rotation of the thrust body 29, whose radial thrust protuberances 40 drive the dosage carrying body 30 upwards by means of the helicoidal thrust grooves 46 that it is provided with, while the radial guide protuberances 47 of the dosage carrying body 30 slide vertically through the guide grooves 36 of the tubular body 28, preventing the rotation of the dosage carrying body 30, said vertical movement continuing until the dosage carrying body 30 reaches a position in which the dosage, arranged in the removable dosage 48 through the apertures 34 and not represented, remains arranged in the outlet chamber 26 of the infusion mechanism 2, immediately proceeding to the coffee infusion by means of the high temperature water coming from the heat exchanger 1 and through the inlet chamber 25 and the retention valve 9. Once the coffee infusion has been made, the rotation of the drive arm 31 in the opposite direction to the previous one, causes,the downward vertical movement of the dosage carrying body 30, to the position represented in Fig. 1, from where the coffee dosage used is withdrawn through the apertures 34 of the tubular body 28, the device of the invention being arranged for a new infusion.

## Claims

1. Device for the infusion of coffee, which comprises a heat exchanger (1), provided with water inlet means and water outlet means at a higher temperature; an infusion mechanism (2), that comprises a water inlet chamber (25) coming from the heat exchanger (1) and an outlet chamber (26) adapted for receiving a dosage; and a coffee dosage carrying mechanism (3), the device being **characterised in that** the heat exchanger (1), the infusion mechanism (2) and the dosage carrying mechanism (3) are coupled vertically and integrally in continuation from the other and defining a longitudinal axis (Y-Y), the dosage carrying mechanism being coupled by means of screws to the infusion mechanism, and **in that** the dosage carrying mechanism (3) comprises dosage carrying body (30), in which the dosage is placed, and a longitudinal movement mechanism provided with a drive arm (31), rotatable in both directions around the longitudinal axis (Y-Y), such that, once the dosage has been placed in the dosage carrying body (30) of the dosage carrying mechanism (3), the rotation of the drive arm (31) in one direction brings about upward vertical movement of the dosage carrying body, placing the dosage in the infusion mechanism (2) outlet chamber (26), whereas the rotation of the drive arm (31) in the opposite direction to the previous one brings about downward movement of the dosage carrying body, allowing the extraction of the dosage.

2. Device according to claim 1, which is **characterised in that** the infusion mechanism (2) comprises an intermediate body (4) fastened to the heat exchanger (1) and provided with a stepped centred through orifice (12), configuring three successive portions in progressively decreasing section from top to bottom, in which the upper portion (13) is adapted for housing a tightening discoidal element (5), provided with a centred through orifice for the water coming from the heat exchanger (1), and a membrane (7), the water inlet chamber (25) being defined between the discoidal element (5) and the membrane (7), whereas the intermediate portion (14) and the lower portion (15) are adapted for housing a piston (8) provided with a centred through orifice (17), in which a retention valve (9), integral to the membrane (7) is housed and, at its lower end, to a cavity which configures the outlet chamber (26).

3. Device according to claims 1 and 2, which is **characterised in that** the dosage carrying mechanism (3) comprises a tubular body (28) that houses a thrust body (29) and the dosage carrying body (30), all of them being arranged co-axially and mutually coupled, in which the tubular body (28) is provided at its upper end with means (32, 33) for its fastening to the intermediate body (4) of the infusion mechanism (2), and laterally, has spacious apertures (34) adapted for allowing the dosage to pass therethrough, before and after being used, and, at its lower end, has means (35, 37, 38, 39) for the coupling of the thrust body (29) and of the dosage carrying body (30); the thrust body (29) is fastened to the drive arm (31) and has a centred through orifice (49); and the dosage carrying body (30) has a cavity (43) for receiving a dosage and has outlet means (44, 45) of the infusion which go through the centred through orifice (49) of the thrust body (29).

4. Device according to claim 3, which is **characterised in that** the longitudinal movement mechanism comprises, both in the thrust body (29) and laterally, two radial thrust protuberances (40) adapted for being housed in respective thrust helicoidal grooves (46) which the dosage carrying body (30) is provided with, the dosage carrying body (30) also being provided with two radial guide protuberances (47) adapted for being housed in respective guide grooves (36) which the tubular body (28) is provided with, all of it being adapted in such a way that the rotation of the drive arm (31) causes the thrust body (29) to turn and the sliding of the radial thrust protuberances (40) through the thrust helicoidal grooves (46) of the dosage carrying body (30), which is thrust vertically, guided by the radial guide protuberances (47) through the guide grooves (36) in the direction corresponding to the rotation of the drive arm (31).

## Patentansprüche

1. Vorrichtung zum Brühen von Kaffee, umfassend einen Wärmetauscher (1), versehen mit Wassereinlassmitteln und Wasserauslassmitteln bei einer höheren Temperatur; einen Brühmechanismus (2), welcher eine aus dem Wärmetauscher (1) kommende Wassereinlasskammer (25) und eine Auslasskammer (26) umfasst, welche dazu angepasst ist, eine Dosis aufzunehmen; und einen Kaffeedosisträgermechanismus (3), wobei die Vorrichtung **dadurch gekennzeichnet ist, dass** der Wärmetauscher (1), der Brühmechanismus (2) und der Dosisträgermechanismus (3) vertikal und vollständig im Anschluss aneinander gekoppelt sind, und eine Längsachse (Y-Y) definieren, wobei der Dosisträgermechanismus mittels Schrauben an den Brühmechanismus gekoppelt ist, und dass der Dosisträgermechanismus (3) einen Dosisträgerkörper (30), in welchem die Dosis platziert wird, und einen Längsbewegungsmechanismus umfasst, der mit einem Antriebsarm (31) versehen ist, der in beide Richtungen um die Längsachse (Y-Y) herum drehbar ist, so dass nach dem Platzieren der Dosis in dem Dosisträgerkörper (30) des Dosisträgermechanismus (3), die Drehung des Antriebsarms (31) in eine Richtung eine vertikale Aufwärtsbewegung des Dosisträgerkörpers hervorruft, wobei die Dosis in der Auslasskammer (26) des Brühmechanismus (2) platziert wird, während die Drehung des Antriebsarms (31) in die Gegenrichtung in Bezug auf die vorherige eine Abwärtsbewegung des Dosisträgerkörpers hervorruft, wobei die Entnahme der Dosis ermöglicht wird.

2. Vorrichtung nach Anspruch 1, **dadurch gekennzeichnet, dass** der Brühmechanismus (2) einen Zwischenkörper (4) umfasst, welcher an dem Wärmetauscher (1) befestigt und mit einer gestuften, mittigen Durchgangsbohrung (12) versehen ist, unter Ausbildung von drei aufeinanderfolgenden Teilen mit einem sich von der Ober- zur Unterseite hin zunehmend verjüngenden Abschnitt, bei welchen der obere Teil (13) dazu angepasst ist, ein scheibenförmiges Spannelement (5) aufzunehmen, welches mit einer mittigen Durchgangsbohrung für das aus dem Wärmetauscher (1) kommende Wasser und einer Membran (7) versehen ist, wobei die Wassereinlasskammer (25) zwischen dem scheibenförmigen Element (5) und der Membran (7) definiert ist, während der Zwischenteil (14) und der untere Teil (15) dazu angepasst sind, einen Kolben (8) aufzunehmen, welcher mit einer mittigen Durchgangsbohrung (17) versehen ist, in welcher ein in der Membran (7) eingebautes Rückschlagventil (9) aufgenommen ist, und an seinem unteren Teil in einer Aushöhlung, welche die Auslasskammer (26) ausbildet.

3. Vorrichtung nach den Ansprüchen 1 und 2, **dadurch gekennzeichnet, dass** der Dosisträgermechanismus (3) einen rohrförmigen Körper (28) umfasst, in welchem ein Schubkörper (29) und der Dosisträgerkörper (30) aufgenommen sind, welche allesamt koaxial angeordnet und miteinander gekoppelt sind, wobei der rohrförmige Körper (28) an seinem oberen Ende mit Mitteln (32, 33) zur Befestigung an dem Zwischenkörper (4) des Brühmechanismus (2) versehen ist, und seitlich weite Öffnungen (34) hat, die dazu angepasst sind, um ein Durchlaufen der Dosis durch dieselben zu ermöglichen, vor und nach deren Verwendung, und an seinem unteren Ende Mittel (35, 37, 38, 39) zum Koppeln des Schubkörpers (29) und des Dosisträgerkörpers (30) hat; wobei der Schubkörper (29) an dem Antriebsarm (31) befestigt ist und eine mittige Durchgangsbohrung (49) hat; und wobei der Dosisträgerkörper (30) eine Aushöhlung (43) zum Aufnehmen einer Dosis und Auslassmittel (44, 45) des Aufgusses hat, welche durch die mittige Durchgangsbohrung (49) des Schubkörpers (29) hindurchgehen.

4. Vorrichtung nach Anspruch 3, **dadurch gekennzeichnet, dass** der Längsbewegungsmechanismus sowohl in dem Schubkörper (29) als auch seitlich zwei radiale, vorstehende Schubteile (40) umfasst, welche dazu angepasst sind, um in jeweiligen spiralförmigen Schubnuten (46) aufgenommen zu werden, mit welchen der Dosisträgerkörper (30) versehen ist, wobei der Dosisträgerkörper (30) auch mit zwei radialen, vorstehenden Führungsteilen (47) versehen ist, welche dazu angepasst sind, um in jeweiligen Führungsnuten (36) aufgenommen zu werden, mit welchen der rohrförmige Körper (28) versehen ist, welche allesamt derart angepasst sind, dass die Drehung des Antriebsarms (31) zu einer Drehung des Schubkörpers (29) und einem Verschieben der radialen, vorstehenden Schubteile (40) durch die spiralförmigen Schubnuten (46) des Dosisträgerkörpers (30) hindurch führt, welcher durch Führung durch die radialen, vorstehenden Führungsteile (47) vertikal durch die Führungsnuten (36) in der der Drehung des Antriebsarms (31) entsprechenden Richtung verschoben wird.

## Revendications

1. Dispositif pour l'infusion de café, qui comprend un échangeur thermique (1), pourvu de moyens d'entré d'eau et de moyens de sortie d'eau à une température plus élevée ; un mécanisme d'infusion (2), qui comprend une chambre d'entrée d'eau (25) provenant de l'échangeur thermique (1) et une chambre de sortie (26) adaptée pour recevoir un dosage ; et un mécanisme porteur de dosage (3) de café, le dispositif étant **caractérisé en ce que** l'échangeur thermique (1), le mécanisme d'infusion (2) et le mécanisme porteur de dosage (3) sont accouplés verticalement et de manière solidaire les uns à la suite des autres en définissant un axe longitudinal (Y-Y), le mécanisme porteur de dosage étant accouplé par le biais de vis au mécanisme d'infusion, et **en ce que** le mécanisme porteur de dosage (3) comprend un corps porteur de dosage (30), dans lequel le dosage est mis en place, et un mécanisme de mouvement longitudinal pourvu d'un bras d'entraînement (31), pouvant tourner dans les deux sens autour de l'axe longitudinal (Y-Y), de manière qu'une fois mis en place le dosage dans le corps porteur de dosage (30) du mécanisme porteur de dosage (3), la rotation du bras d'entraînement (31) dans un sens produit le mouvement vertical vers le haut du corps porteur de dosage, en mettant en place le dosage dans la chambre de sortie (26) du mécanisme d'infusion (2), tandis que la rotation du bras d'entraînement (31) dans le sens opposé au précédent produit un mouvement vers le bas du corps porteur de dosage, permettant l'extraction du dosage.

2. Dispositif selon la revendication 1, qui est **caractérisé en ce que** le mécanisme d'infusion (2) comprend un corps intermédiaire (4) fixé à l'échangeur thermique (1) et pourvu d'un orifice traversant centré et échelonné (12), qui configure trois portions successives en section progressivement décroissante allant de haut en bas, dans lequel la portion supérieure (13) est adaptée pour loger un élément discoïde de serrage (5) pourvu d'un orifice traversant centré pour l'eau provenant de l'échangeur thermique (1), et une membrane (7), la chambre d'entrée d'eau (25) étant définie entre l'élément discoïde (5) et la membrane (7), tandis que la portion intermédiaire (14) et la portion inférieure (15) sont adaptées pour loger un piston (8) pourvu d'un orifice traversant centré (17), dans lequel est logée une soupape de retenue (9) solidaire de la membrane (7) et, à son extrémité inférieure, d'une cavité qui configure la chambre de sortie (26).

3. Dispositif selon les revendications 1 et 2, qui est **caractérisé en ce que** le mécanisme porteur de dosage (3) comprend un corps tubulaire (28) qui loge un corps de poussée (29) et le corps porteur de dosage (30), étant tous disposés en formant un accouplement coaxial et mutuel, dans lequel le corps tubulaire (28) est pourvu à son extrémité supérieure de moyens (32, 33) pour sa fixation au corps intermédiaire (4) du mécanisme d'infusion (2), et présente, latéralement, des ouvertures spacieuses (34) adaptées pour permettre que le dosage passe à travers de celles-ci, avant et après son utilisation, et présente, à son extrémité inférieure, des moyens (35, 37, 38, 39) pour l'accouplement du corps de poussée (29) et du corps porteur de dosage (30) ; le corps de poussée (29) est fixé au bras d'entraînement (31) et présente un orifice traversant centré (49) ; et le corps porteur de dosage (30) présente une cavité (43) pour la réception d'un dosage et présente des moyens de sortie (44, 45) de l'infusion qui passe à travers l'orifice traversant centré (49) du corps de poussé (29).

4. Dispositif selon la revendication 3, qui est **caractérisé en ce que** le mécanisme de mouvement longitudinal comprend, aussi bien dans le corps de poussé (29) que latéralement, deux protubérances radiales de poussé (40) adaptées pour être logées dans des rainures hélicoïdales de poussée (46) respectives dont est pourvu le corps porteur de dosage (30), le corps porteur de dosage (30) étant également pourvu de deux protubérances radiales de guidage (47) adaptées pour être logées dans des rainures de guidage (36) respectives dont est pourvu le corps tubulaire (28), le tout étant adapté de telle manière à ce que la rotation du bras d'entraînement (31) fasse que le corps de poussée (29) tourne et que les protubérances radiales de poussé (40) glissent à travers les rainures hélicoïdales de poussée (46) (46) du corps porteur de dosage (30), qui est poussé verticalement, guidé par les protubérances radiales de guidage (47) à travers les rainures de guidage (36) dans la direction correspondant à la rotation du bras d'entraînement (31).
